# EUROPEAN PATENT SPECIFICATION

(11) **EP 2 520 967 B1**
(45) Date of publication and mention of the grant of the patent: **19.03.2014**
(21) Application number: 12176569.7
(22) Date of filing: 03.09.2009
(51) Int. Cl.: G02B 27/22, H01S 3/108, G02B 27/10, G02F 1/35, G02F 1/13357, H04N 9/31, G02F 1/39

(54) **Stereoscopic projection system**
Stereoskopischer Projektionsapparat
Système de projection stéreoscopique

(30) Priority: 04.09.2008 US 94202 P; 07.03.2009 US 158352 P; 04.04.2009 US 166710 P; 21.05.2009 US 180178 P; 10.07.2009 US 224615 P; 10.07.2009 US 224824 P; 10.07.2009 US 224826 P; 10.07.2009 US 224829 P; 26.07.2009 US 228611 P; 07.08.2009 US 232037 P
(43) Date of publication of application: 07.11.2012
(62) Divisional of application: 09752017.5
(73) Proprietor: Laser Light Engines, Inc., Stratham, NH 03885 (US)
(72) Inventor: Coppeta, David, Salem, NH 03079 (US); Turner, Ian, Salem, NH 03079 (US); Beck, William, Salem, NH 03079 (US); Goodwin, Dave, Salem, NH 03079 (US); Zambuto, James, Salem, NH 03079 (US)
(74) Representative: Findlay, Alice Rosemary

(56) References cited:
- US-B1- 6 283 597
- LEE D ET AL: "High-efficiency, high-power, OPO-based RGB source", CONFERENCE ON LASERS AND ELECTRO-OPTICS. (CLEO 2001). TECHNICAL DIGEST. POSTCONFERENCE EDITION. BALTIMORE, MD, MAY 6-11, 2001; [TRENDS IN OPTICS AND PHOTONICS. (TOPS)], US, WASHINGTON, WA : OSA, US, vol. VOL. 56, 6 May 2001 (2001-05-06), pages 424-424, XP010560021, DOI: 10.1109/CLEO.2001.947999 ISBN: 978-1-55752-662-5
- ACHIM NEBEL: "Concepts and performance of solid state RGB laser sources for large-frame laser projection displays", PROCEEDINGS OF SPIE, vol. 3954, 1 January 2000 (2000-01-01), pages 163-166, XP55038895, ISSN: 0277-786X, DOI: 10.1117/12.383368

## Description

### BACKGROUND OF THE INVENTION

Movie theaters have traditionally relied on projectors which use an arc-lamp as the source of light. This is a highly inefficient source for projecting an image onto a screen due to the extended size of the source, its low brightness, its broadband light, and the relatively short lifetime of the lamp itself. The cost of ownership to theater owners is large due to the frequent lamp changes required, the cost of electricity to operate the multi kilowatt lamps as well as the cooling required to keep the projector room at a normal operating temperature.

The move to digital cinema further reduces the efficiency of the lamp due to the requirement that the light needs to be separated into component red/green/blue bands to illuminate three modulation arrays in a uniform manner before recombining the beams for projection. Finally, 3-D digital cinema requires even more light as the projected image must be alternated between scenes for the left and right eyes which reduces the apparent brightness of the image on the screen.

Red, Green, Blue solid state lasers seem to be a viable solution to these problems while reducing the total cost of ownership. The pump lasers have very long rated lives, on the order of 20,000 hours, eliminating the need for lamp replacements. Semiconductor pump lasers have high electrical to optical efficiency meaning much less heat generation for a given output power as compared to arc lamps. The lasers are narrow-band which makes them easier to separate with little light loss. They also are much brighter sources which allows high optical throughput. Finally lasers are typically polarized which provides a big power advantage for some 3-D display technologies.

Solid-state lasers are not without problems, however. The typical high purity TEM00 Gaussian spatial mode is difficult to convert to a uniform source over the digital modulators. The narrow line width of a laser leads to speckle patterns over the viewed image which may lead to an unacceptable loss of image quality.

The optical designs of most digital image projectors use spatial light modulators (SLMs) to switch each pixel on and off in order to create a visual image. The SLMs may be reflective, such as liquid crystal on silicon (LCOS) devices and digital micromirror devices (DMDs), or may be transmissive such as liquid crystal display (LCD) panels.

Some of the commonly used components of laser optical systems include optical parametric oscillators (OPOs), and laser gain modules. OPOs may be used to generate multiple wavelengths of laser light from one pump laser beam. In the OPO, parametric amplification in a nonlinear crystal converts the pump laser wavelength into two more wavelengths of light, so an optical system with one pump laser and one OPO may produce at total of three wavelengths of visible light which are useful for applications such as full-color digital image projection. Laser gain modules are used to optically amplify laser light. A laser is used to pump a gain slab which is composed of a gain medium. Optical energy is transferred from the pump beam into a main beam of light which is also traveling through the gain slab.

Many other optical components are used in laser light sources, projectors, and optical systems in general. Commonly used abbreviations are as follows: ultra-high performance (UHP) lamp, polarizing beamsplitter (PBS), dichroic beamsplitter (DBS), second harmonic generation (SHG) unit, total-internal-reflection (TIR) prism, antireflection (AR) coating, neodymium-doped yttrium lithium fluoride (Nd:YLF) laser, neodymium-doped yttrium aluminum perovskite (Nd:YAP) laser, neodymium-doped yttrium lithium fluoride (Nd:YLF) laser, lithium triborate (LBO) crystal, short wave pass (SWP) filter, long wave pass (LWP) filter, subminiature A (SMA) connector, and light emitting diode (LED). Some of the concepts used in optics and their abbreviations are full-width half maximum (FWHM) bandwidth, angle of incidence (AOI), and ultraviolet (UV) light. The organizations and industry standards that apply include the Digital Cinema Initiative (DCI), the Commission Internationale de I'Eclairage (CIE), and the International Telecommunication Union Radiocommunication (ITU-R) Recommenation 709 (Rec. 709).

Assembly and alignment of optical systems generally require that the optical components be placed in a desired position with high accuracy and that the components be held in that position throughout shipping and over the lifetime of the product. In manufacturing quantities of thousands or more, conventional optical assembly techniques do not provide cost-effective methods for assembling optical devices with high tolerances such as complex laser systems. Optical systems are typically assembled on the upper surface of a flat optical support structure. Each optical component of the optical system is aligned and attached to the flat optical support structure in its desired location.

A stereoscopic projector forms still or moving images that can be seen in three dimensions. Stereoscopic projection systems may be formed by using polarized light to form distinct images for the left eye and the right eye. These images simulate the images that would be seen in an actual three-dimensional scene. One polarization state is used for the left-eye image and the orthogonal polarization is used for the right-eye image. Glasses with polarizing filters are used to allow the left image to pass through to the left eye and the right image to pass through to the right eye, while blocking the left image from reaching the right eye, and blocking the right image from reaching the left eye. In other words, the image for the left eye is directed to the left eye and not to the right eye, whereas the image for the right eye is directed to the right eye and not to the left eye.

Instead of using polarized light, stereoscopic left and right images may be formed by using spectral selection, for example as described in US Patent No. 6,283,597, the complete disclosure of which is incorporated herein by reference. In the spectral selection method, first wavelength bands of red, green, and blue are passed to the left eye, and second wavelength bands of red, green, and blue are passed to the right eye. The first bands and second bands are distinct so that there is little or no overlap between the first and second bands.

Stereoscopic projection systems can be characterized as one of three basic types: (1) time-sequential projection that uses one SLM per color and alternately shows left eye images and right eye images in rapid sequence, (2) simultaneous projection that uses two SLMs per color, one for the left eye images and one for the right eye images, and (3) split image projection, where there is only one SLM per color, and the left and right eye images are formed simultaneously on separate parts or pixels of the single SLM.

In summary, the main problems facing digital image projectors are providing a bright image with a long operation lifetime, especially in the case of stereoscopic systems, and providing an alignment and assembly method that is feasible in full-scale production.

### SUMMARY OF THE INVENTION

The invention is defined in the appended claims, to which reference should be made.

Implementations may include one or more of the following features. There may be a third infrared laser, a third gain module that amplifies the light beam from the third infrared laser, a fifth SHG that frequency doubles the light beam from the third gain module; a second OPO that parametrically amplifies the light beam from the fifth SHG, a sixth SHG that frequency doubles the first light beam from the second OPO, a seventh SHG that frequency doubles the second light beam from the second OPO, and the like. The light beam from the sixth SHG may have a second color of red light, and the light beam from the seventh SHG may have a second color of blue light.

### BRIEF DESCRIPTION OF THE SEVERAL VIEWS OF THE DRAWING

FIG. 1 is a block diagram of an optical system which includes at least one laser light source, at least one coupler, and at least one set of SLMs;
FIG. 2 is a top view of stereoscopic projection;
FIG. 3 is a block diagram of a projector light engine;
FIG. 4 is a block diagram of a laser light system based on two lasers;
FIG. 5 is a block diagram of a laser light system based on three lasers;
FIG. 6 is a flowchart of a method of generating light based on two lasers;
FIG. 7 is a flowchart of a method of generating light based on three lasers;
FIG. 8 is a front view of a portrait-oriented SLM with two images located one above the other; and
FIG. 9 is a front view of a landscape-oriented SLM with two images located one above the other;

### DETAILED DESCRIPTION

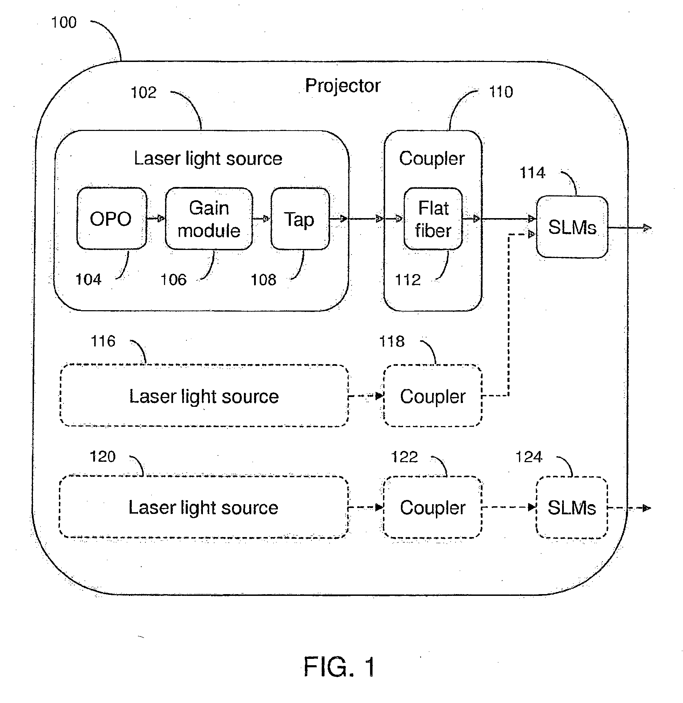

FIG. 1 is a block diagram of optical system 100 which has a number of novel parts that will be explained in the following description. First laser light source 102 may include OPO 104, laser gain module 106, and optical tap 108. Light is generated in OPO 104, passes through gain module 106, then through tap 108. The light then passes through first coupler 110 which includes flat-sided fiber 112, and then is processed by first SLMs 114. The light is then projected out of the optical system.

Second laser light source 116 may optionally be included for stereoscopic optical systems. The light from second laser light source 116 passes through second coupler 118 and then through first SLMs 114. The light is then projected out of the optical system. Alternatively, third laser light source 120 may optionally be included for stereoscopic optical systems. The light from third laser light source 120 passes through third coupler 122 and then through second SLMs 124. The light is then projected out of the optical system. Second laser light source 116 and third laser light source 120 may also include OPOs, gain modules, and optical taps (not shown).

In one aspect of the optical system shown in FIG. 1, a stereoscopic projection system separates left and right images by using spectral selection, for example as described in US Patent No. 6,283,597. In the spectral selection method, first wavelength bands of red, green, and blue are passed to the left eye, and second wavelength bands of red, green, and blue are passed to the right eye. The first bands and second bands are distinct so that there is little or no overlap between the first and second bands. First laser light source 102 may be used to provide the first bands of red, green, and blue light and second laser light source 116 or third laser light source 120 may be used to provide the second bands of red, green, and blue light. Specific embodiments are described in the following paragraphs but are not meant to be limiting in any way.

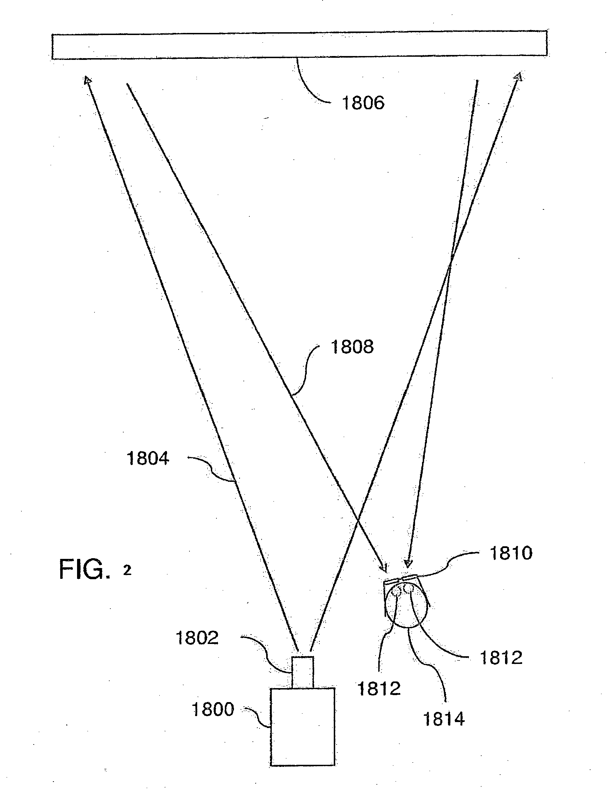

FIG. 2 shows the general layout of a stereoscopic image projection system. Projector 1800 emits light beam 1804 from lens 1802. Light beam 1804 impinges on screen 1806 and reflects light beam 1808 through filter glasses 1810 to the eyes 1812 of viewer 1814. Projector 1800 may form distinct images for each eye 1812 by time sequencing different images for each eye 1812. Alternately, projector 1800 may be two separate projectors, one forming the image for the left eye and one forming the image for the right eye.

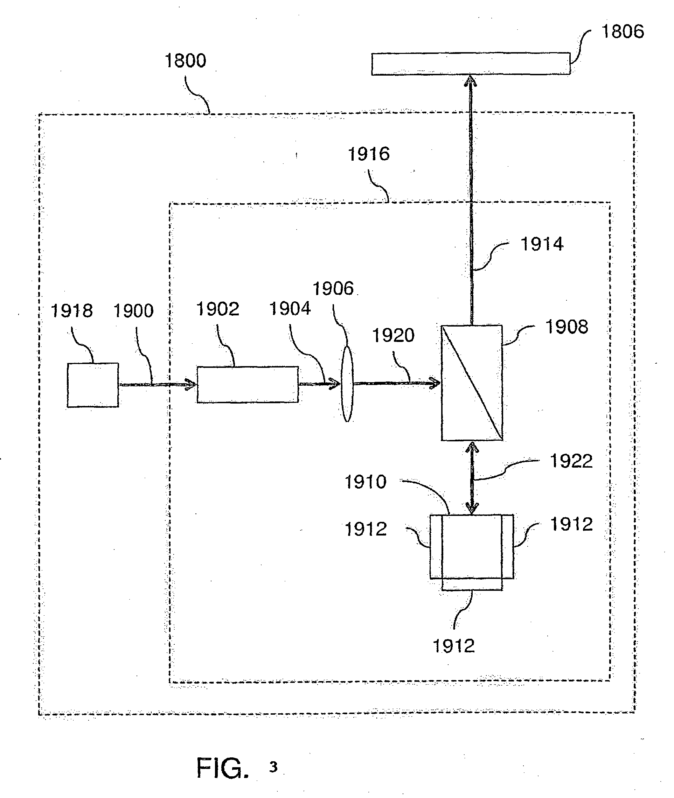

FIG. 3 shows an example of the operation of projector 1800 which includes light system 1918 and projection engine 1916. Light system 1918 emits first light beam segment 1900 into projection engine 1916. First light beam segment 1900 enters mixing rod 1902 which forms second light beam segment 1904. Second light beam segment 1904 enters lens 1906 which forms third light beam segment 1920. Third light beam segment 1920 enters splitting prism 1908 which forms fifth light beam segment 1922. Fifth light beam segment 1922 enters color prism 1910 and is separated into three colors which then impinge on light valves 1912. Each light valve 1912 forms an image in a distinct color and then the imaged light beams are combined by color prism 1910 and sent back along the path of fifth light beam path segment 1922 into splitting prism 1908. Splitting prism 1908 outputs the imaged light beam as sixth light beam segment 1914 to form an image on screen 1806. Splitting prism 1908 may be a total TIR prism and color prism 1910 may be a Philips prism.

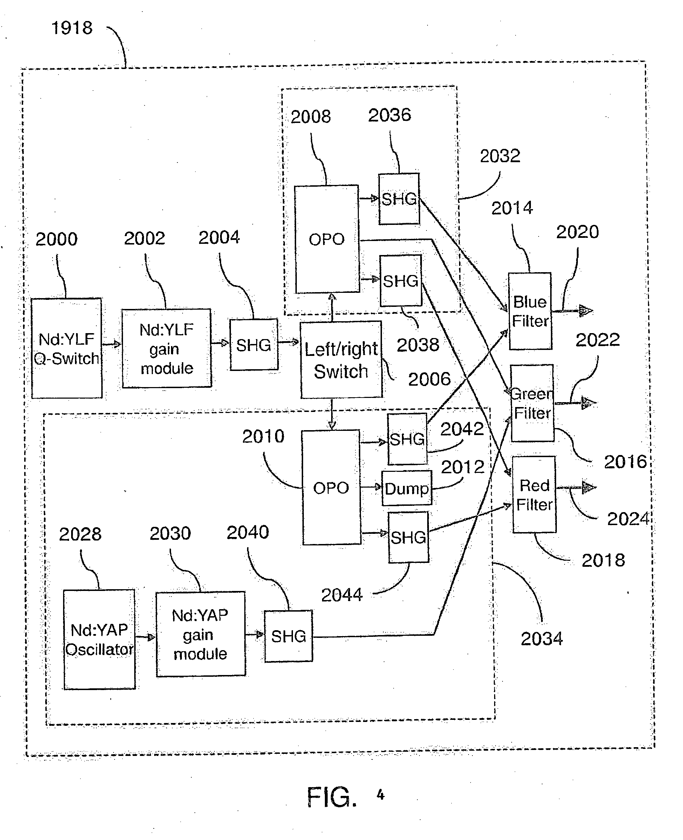

FIG. 4 shows one embodiment of light system 1918 which is based on two lasers. Nd:YLF laser 2000 generates light at 1047 nm which enters Nd:YLF gain module 2002, is optically amplified by gain module 2002, then enters SHG unit 2004 where it is converted to green light at 523.5 nm. The green light is rapidly switched by left/right switch 2006 so that it passes to either OPO 2008 or OPO 2010. A fraction of the 523.5 nm light in OPO 2008 is converted to 910 nm and a fraction is converted to 1230 nm. The 910 nm light exits OPO 2008 and is converted by SHG unit 2036 into 455 nm blue light. The 1230 nm light exits OPO 2008 and is converted by SHG unit 2038 into 615 nm red light. The 532.5 nm green light that is not lost in OPO 2008 or converted into blue or red light by OPO 2008, exits OPO 2008. The left/right switch 2006 may be synchronized with the display of left and right images to use the green laser light efficiently.

A fraction of the 523.5 nm light in OPO 2010 is converted to 880 nm and a fraction is converted to 1288 nm. The 880 nm light exits OPO 2010 and is converted by SHG unit 2042 into 440 nm blue light. The 1288 nm light exits OPO 2010 and is converted by SHG unit 2044 into 644 nm red light. The 532.5 nm green light that exits OPO 2010 goes into beam dump 2012.

Nd:YAP laser 2028 generates light at 1079.5 nm which enters Nd:YAP gain module 2030, is optically amplified by gain module 2030, then enters SHG unit 2040 where it is converted to green light at 539.7 nm.

The 455 nm blue light from OPO 2008 and the 440 nm blue light from OPO 2010 pass through blue filter 2014 and form light beam 2020. The 523.5 nm green light from OPO 2008 and the 539.7 nm green light from SHG unit 2040 pass through green filter 2016 and form light beam 2022. The 615 nm red light from OPO 2008 and the 644 nm red light from OPO 2010 pass through red filter 2018 and form light beam 2024. Light beams 2020, 2022, and 2024 are combined together to form light beam 1900.

OPO 2008, SHG unit 2036, and SHG unit 2038 form light generation unit 2032 which is used to form images for the left eye. Nd:YAP laser 2028, ND:YAP gain module 2030, SHG unit 2040, OPO 2010, SHG unit 2042, beam dump 2012, and SHG unit 2044 form light generation unit 2034 which is used to form images for the right eye. Alternately, light generation unit 2032 may be used for the right eye and light generation unit 2034 may be used for the left eye.

Light system 1918 as described in Figure 4 may produce at least 50 watts of optical power including all six colors of output in light beams 2020, 2022, and 2024. If the total optical power output is 100 watts, Nd:YLF laser 2000 may produce about 2 watts of 1047 nm light and Nd:YLF gain module 2002 may produce about 300 watts of 1047 nm light. Nd:YAP laser 2028 may produce about 2 watts of 1079.5 nm light and Nd:YAP gain module 2030 may produce about 60 watts of 1079.5 nm light.

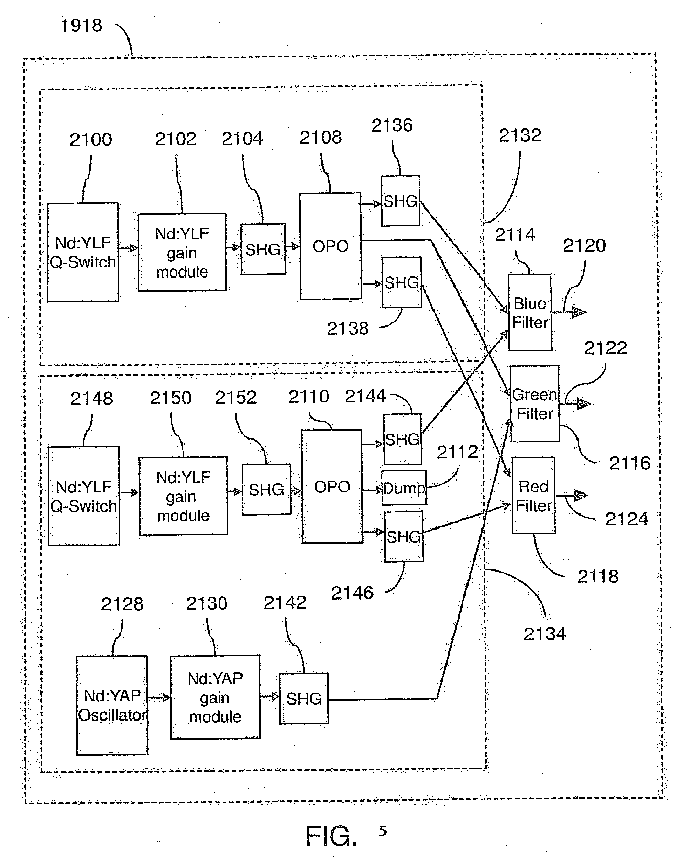

FIG. 5 shows another embodiment of light system 1918 which is based on three lasers. Nd:YLF laser 2100 generates light at 1047 nm which enters Nd:YLF gain module 2102, is optically amplified by gain module 2102, then enters SHG unit 2104 where it is converted to green light at 523.5 nm and enters OPO 2108. A fraction of the 523.5 nm light in OPO 2108 is converted to 910 nm and a fraction is converted to 1230 nm. The 910 nm light exits OPO 2108 and is converted by SHG unit 2136 into 455 nm blue light. The 1230 nm light exits OPO 2108 and is converted by SHG unit 2138 into 615 nm red light. The 532.5 nm green light that is not lost in OPO 2108 or converted into blue or red light by OPO 2108, exits OPO 2108.

Nd:YLF laser 2148 generates light at 1047 nm which enters Nd:YLF gain module 2150, is optically amplified by gain module 2150, then enters SHG unit 2152 where it is converted to green light at 523.5 nm and enters OPO 2110. A fraction of the 523.5 nm light in OPO 2110 is converted to 880 nm and a fraction is converted to 1288 nm. The 880 nm light exits OPO 2110 and is converted by SHG unit 2144 into 440 nm blue light. The 1288 nm light exits OPO 2110 and is converted by SHG unit 2146 into 644 nm red light. The 532.5 nm green light that exits OPO 2110 goes into beam dump 2112.

Nd:YAP laser 2128 generates light at 1079.5 nm which enters Nd:YAP gain module 2130, is optically amplified by gain module 2130, then enters SHG unit 2142 where it is converted to green light at 539.7 nm.

The 455 nm blue light from OPO 2108 and the 440 nm blue light from OPO 2110 pass through blue filter 2114 and form light beam 2120. The 523.5 nm green light from OPO 2108 and the 539.7 nm green light from SHG unit 2142 pass through green filter 2116 and form light beam 2122. The 615 nm red light from OPO 2108 and the 644 nm red light from OPO 2110 pass through red filter 2118 and form light beam 2124. Light beams 2120, 2122, and 2124 are combined together to form light beam 2100. The blue, green, and red filters may be band pass filters that block visible colors and infrared light of wavelengths outside the pass band.

Nd:YLF laser 2100, Nd:YLF gain module 2102, SHG unit 2104, OPO 2108, SHG unit 2136, and SHG unit 2138 form light generation unit 2132 which is used to form images for the left eye. Nd:YLF laser 2148, Nd:YLF gain module 2150, SHG unit 2152, OPO 2110, SHG unit 2144, beam dump 2112, SHG unit 2146, Nd:YAP laser 2128, ND:YAP gain module 2130, and SHG unit 2142, form light generation unit 2134 which is used to form images for the right eye. Alternately, light generation unit 2132 may be used for the right eye and light generation unit 2134 may be used for the left eye.

Light system 1918 as described in Figure 5 may produce at least 50 watts of optical power including all six colors of output in light beams 2120, 2122, and 2124. If the total optical power output is 100 watts, Nd:YLF lasers 2100 and 2148 each produce about 2 watts of 1047 nm light and Nd:YLF gain module 2102 and 2150 each produce about 300 watts of 1047 nm light. Nd:YAP laser 2128 produces about 2 watts of 1079.5 nm light and Nd:YAP gain module 2130 produce about 60 watts of 1079.5 nm light.

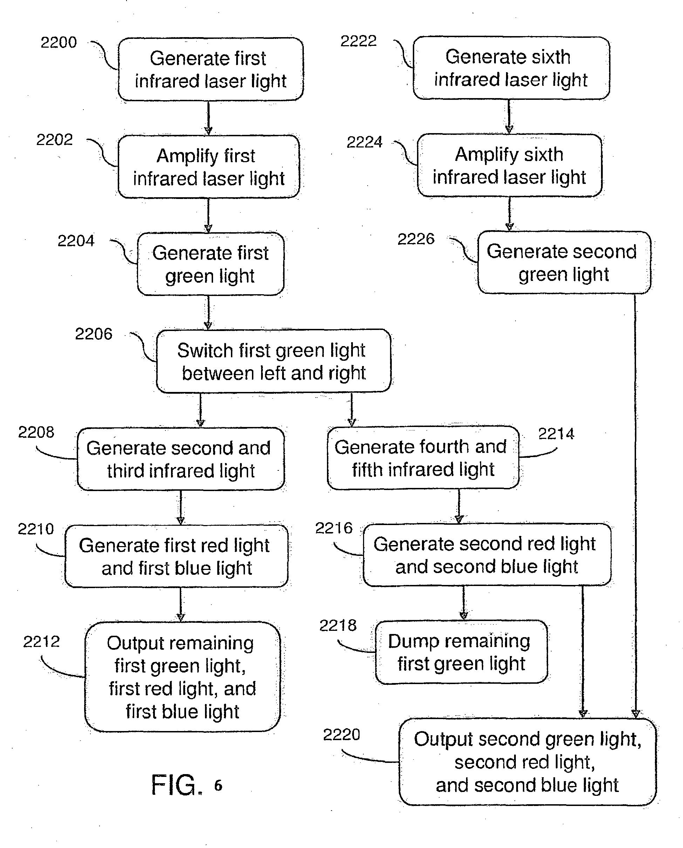

FIG. 6 shows a method of generating light based on two lasers which corresponds to the laser light system shown in FIG. 4. In step 2200, a first beam of infrared laser light is generated. In step 2202, the first beam of infrared light is amplified. In step 2204, a first green light is generated by converting the first beam of infrared light to green light. In step 2206, the first green light is switched between left eye and right eye beams. In step 2208, the left, first green light is converted to second and third beams of infrared light. In step 2210, first red light and first blue light are generated by converting the second and third beams of infrared light. In step 2212, the remaining first green light, first red light, and first blue light are output by the method. In step 2214, the right, first green light is converted to fourth and fifth beams of infrared light. In step 2216, second red light and second blue light are generated by converting the fourth and fifth beams of infrared light. In step 2218, the remaining right, first green light is absorbed by a beam dump. In step 2222, a sixth beam of infrared laser light is generated. In step 2224, the sixth beam of infrared light is amplified. In step 2226, a second green light is generated by converting the sixth beam of infrared light to green light. In step 2220, the second green light, second red light, and second blue light are output by the method.

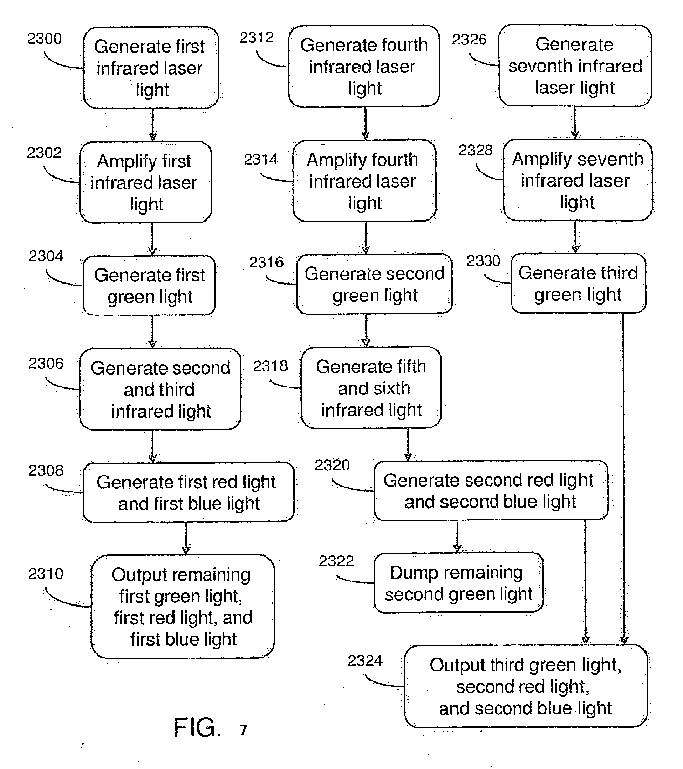

FIG. 7 shows a method of generating light based on three lasers which corresponds to the laser light system shown in FIG. 5. In step 2300, a first beam of infrared laser light is generated. In step 2302, the first beam of infrared light is amplified. In step 2304, a first green light is generated by converting the first beam of infrared light to green light. In step 2306, the first green light is converted to second and third beams of infrared light. In step 2308, first red light and first blue light are generated by converting the second and third beams of infrared light. In step 2310, the remaining first green light, first red light, and first blue light are output by the method. In step 2312, a fourth beam of infrared laser light is generated. In step 2314, the fourth beam of infrared light is amplified. In step 2316, a second green light is generated by converting the first beam of infrared light to green light. In step 2318, the second green light is converted to fifth and sixth beams of infrared light. In step 2320, second red light and second blue light are generated by converting the fifth and sixth beams of infrared light. In step 2322, the remaining second green light is absorbed by a beam dump. In step 2326, a seventh beam of infrared laser light is generated. In step 2328, the seventh beam of infrared light is amplified. In step 2330, a third green light is generated by converting the seventh beam of infrared light to green light. In step 2324, the third green light, second red light, and second blue light are output by the method.

OPOs such as those shown in elements 2008, 2010, 2108, and 2110 in Figures 4 and 5 use parametric amplification to convert a fraction of the input light into two other wavelengths. By suitably designing the OPO and controlling operation parameters such as temperature, when the input light is green, the outputs may be blue and red, thus making all three colors required for a full-color projection display. By mixing red, green, and blue light, other colors may be generated in projector 1800. In Figure 5, OPO 2008 and OPO 2010 are controlled at different temperatures in order to make different output wavelengths. In Figure 21, OPO 2108 and OPO 2110 are controlled at different temperatures in order to make different output wavelengths. In order to achieve the desired color of white light (also called the white point), there must be a certain fraction of red light, blue light, and green light mixed together. If the OPO under converts green light into blue light and red light, some green light must be wasted when forming white light. If the OPO over converts green light into blue light and red light, the OPO conversion efficiency can be controlled by slightly detuning the OPO in order to attain the desired white point. An optical sensor such as a color sensor may be employed for real time sensing of the white point and real time control of the OPO tuning to maintain the desired white point over time. An intensity sensor may likewise be employed for real time sensing of the output power and real time control of the light system output to maintain the desired output intensity over time. Alternately, each color channel can be monitored separately with an optical sensor to achieve the desired white point and overall output intensity. The outputs from the color or intensity sensors may be electrical signals that feed into electronic circuits that control the intensity of each color channel.

The OPOs shown in FIGS. 4 and 5 may be constructed from LBO crystals operated in the type I, noncritical phase matching mode. In this condition, the temperature of OPO 2008 and OPO 2108 may be 131 degrees Celsius and the temperature of OPO 2010 and OPO 2110 may be 137 degrees Celsius. The resultant output wavelengths of the laser light systems in FIGS. 20 and 21 may be 523.5 nm, 539.7 nm, 615 nm, 644 nm, 455 nm, and 440 nm. The wavelengths may vary 1 or 2 nm from these values without changing the essential nature of operation.

Laser light systems enable light to be generated in the narrow bands required by the spectrally selective stereoscopic glasses. This allows high brightness images even when projected on large screen sizes. Conventional projector light sources, such as Xenon bulbs, must be filtered to produce narrow bands and thus are highly inefficient leading to brightness limitations, especially for large screen sizes. Laser light systems also produce narrower bands than filtered Xenon sources which allow the colors to be better placed for achieving optimal color gamut and optimal isolation between the two eyes to reduce ghosting.

Gain modules such as those shown in FIGS. 4 and 5 use stimulated emission from a gain medium to amplify light so that the output beam has higher power than the input beam. The detailed operation of gain modules is described in US Patent No. 5,774,489, the complete disclosure of which is incorporated herein by reference. Gain modules include one or more states of gain where each stage of gain includes one gain slab and associated pump lasers.

SHG units such as those shown in SHG units 2004, 2036, 2038, 2040, 2042, 2044, 2104, 2136, 2138, 2152, 2142, 2144, and 2146 in FIGS. 4 and 5 use nonlinear optical processes to convert the wavelength of the original light into a harmonic wavelength such as half the original wavelength. The detailed operation of SHG units is described in US Patent No. 4,019,159, the complete disclosure of which is incorporated herein by reference.

The wavelengths of light used for spectrally-selective stereoscopic imaging can be any wavelengths that can be filtered such that one set of wavelengths arrives only at one eye, and the other set arrives only at the other eye. There may be one wavelength for each eye, two wavelengths for each eye, three wavelengths for each eye, or more. The case of three wavelengths for each eye (six colors total) is the minimum number of wavelengths to produce a full color image. In the case of four wavelengths for each eye, a larger gamut of colors can be expressed than in the case of three wavelengths for each eye. The wavelengths described in Figures 4 and 5 may be adjusted to fit the requirements of the individual projection systems or available wavelength selective glasses.

The FWHM bandwidths of the wavelength bands may be as narrow as 0.05 nm or as wide as 20 nm depending on the types of lasers used and the construction of the OPOs, gain modules, SHG units, and filters. Narrow wavelength bands are generally subject to increased visible speckle when compared to wider bands. Laser light systems allow a larger color gamut than conventional light sources such as Xenon lamps. Particularly in the green region of the color gamut, an alternate color space is available because laser light systems allow substantial generation of light at 532.5 nm rather than the typical green wavelength of Xenon lamps which is centered near 546 nm.

The color gamut of the laser light system may be tuned by changing the operation temperature of the nonlinear element in the OPO or other parameter of the OPO such that the red and blue wavelengths are shifted. Typically, when the red wavelength shifts towards the center of the visible wavelength band, the blue also shifts towards the center of the visible. This makes a direct tradeoff between size of the color gamut and brightness because when the red and blue are shifted towards the center of the visible wavelength band, the human eye perceives higher brightness according to the photopic sensitivity curve whereas when the red and blue are shifted away from the center of the visible wavelength band, the color gamut is larger, but the human eye perceives less brightness.

Q-switched lasers are often best to achieve the high power densities required for the nonlinear effects in OPOs and SHG units. The Q-switching frequency may be in the range of 20 kHz to 300 kHz, with pulse widths of 5 ns to 100 ns. Continuous wave (also called oscillator) lasers may alternately be used in some cases such as is shown in lasers 2028 and 2128 of Figures 4 and 5.

Spectrally selective glasses, as shown in FIG. 2, allow left eye images to be transmitted to only the left eye and right eye images to be transmitted to only the right eye. The narrow bands of light from laser light systems enable the efficient use of narrow transmission bands in the spectrally selective glasses which has the benefits of reduced ghosting and improved rejection of ambient light. Glasses may be active (shutter) glasses or passive (non-shutter) glasses. In the case of active glasses, the glasses may be synchronized with the pulses of the laser light system to attain high system efficiency.

Various projector types can be used with laser light systems. In addition to the DMD design shown in FIG. 3, laser light systems can be used with LCOS light valves, LCD light valves, and other types of light valves. The design of the projector will be different for each type of light valve, but the laser light system may generally be substituted for a xenon or other broad band light source with very few or no changes in the projector design. This allows after-market substitution of the laser light system. If the projector is to be designed specifically for operation with a laser light system, the projector may be designed with a low etendue that matches the low etendue of the laser light system. This may allow the projector to generate higher contrast images compared to a projector with higher etendue. Polarized laser light systems may allow more efficient light throughput when combined with light valves that operate with polarized light such as LCD and LCOS light valves. The polarization may be linear or circular.

SLMs may be formed from a variety of light valve technologies. Some are based on polarized light such as LCD and LCOS technologies whereas some do not depend on polarized light such as DMDs. DMD SLMs are usually not as sensitive to shortwave optical radiation as LCD and LCOS SLMs, but even DMD SLMs may be adversely affected if the intensity of the shortwave radiation is high enough. Other types of light valves are less commonly used and depending on their materials, may or may not be affected by shortwave optical radiation. Liquid crystal materials are used to rotate the polarization of light in LCD and LCOS SLMs. For example, if polarized light is incident on a liquid crystal pixel, by controlling the voltage across the liquid crystal material, the polarization state of light passing through the pixel may be variably changed depending on the voltage. A polarizer or PBS acts as a filter on the exit side of the light valve to allow through only light that is of the desired polarization. A dark pixel is formed when the polarizer or PBS does not allow transmission out of the projector and a bright pixel is formed when the polarizer or PBS does allow transmission out of the projector. Any intermediate state of polarization can make an intermediate brightness pixel. The primary optical characteristic of the SLM (and associated optical elements such as the polarizer and PBS) is contrast between the darkest possible state and the brightest possible state. Other optical characteristics include switching speed and maximum possible transmission. Light with wavelengths shorter than 430 nm may degrade the optical characteristics of the SLM and its associated optical elements. The degradation may take the form of decreased contrast, decreased light transmission, increased switching speed, or a degradation of any other optical characteristic necessary for the proper functioning of the SLM. If only light above 430 nm is used, the optical characteristics of the SLM will be preserved leading to an improved lifetime for the optical system.

There are two types of LCOS SLMs: organic and inorganic. Organic LCOS SLMs use an organic material such as a polyimide plastic to align the liquid crystal layer, whereas inorganic LCOS SLMs use an inorganic alignment material such as SiO₂**.** Although LCOS SLMs with organic alignment layers are more easily damaged by shortwave optical radiation, inorganic LCOS SLMs are also damaged given enough time and intensity.

In order to achieve the desired brightness, a light source of sufficient output should be used in a projection system. For a given light source technology, light output tends to scale with light-source power consumption (wattage), but there are limits on the maximum wattage light source that can be efficiently utilized in a projection system. For example, arc lamps for cinema projectors are typically limited to about 7 kilowatts for DMD-based projectors because at higher powers, the arc becomes too long and the etendue of the light source exceeds the etendue of the DMD projection system. This prevents efficient use of the light generated in the light source. For LCOS projectors, a 7 kilowatt lamp might be accepted by the etendue of a given LCOS projection system, but the limiting factor may instead be the amount of damaging shortwave optical radiation that is generated by the arc lamp. At even higher powers, the etendue of the lamp may still become the limiting factor. An unfiltered laser light system has the advantage that an arbitrarily large power can be used without the limitations of damage by shortwave optical radiation.

The 430 nm definition of shortwave optical radiation is an approximation because the wavelengths of light that can cause damage depend on the exact construction of the SLM, the composition of the liquid crystal material, and the material of the associated optical components such as polarizers or PBSs among other factors. Wavelengths below approximately 200 nm are emitted by arc lamp sources, but are strongly absorbed by the air, so they are not a factor in causing damage to SLMs. The most damaging rays are generally in the range of 200 nm to 430 nm which is the region considered shortwave optical radiation. The range of wavelengths from 200 nm to 380 nm is considered UV light and the range of wavelengths from 380 nm to 430 nm is considered shortwave blue light. The range of wavelengths between 430 nm and 500 nm is considered longwave blue light.

In order to eliminate damaging wavelengths of light from an arc lamp illumination source, projectors usually use optical filters. These are typically shortwave cut-off filters that operate on principles of multilayer interference or absorption or both. These filter designs have a gradual cut-off rather than an infinitely sharp cut-off, so for the purposes of this description, the cutoff wavelength may be considered as the wavelength where 10% of the light is transmitted. Even in the transmission band at longer wavelengths than the cut-off wavelength, there is reduced transmission due to reflections or absorptions in the filter at the longer wavelengths. These losses contribute to the desirability of using illumination systems that do not have a cut-off filter.

As described, a stereoscopic projection system may be formed by using the principle of spectral selection to separate left and right images as described in US Patent No. 6,283,597. In the spectral selection method, first primary colors of red, green, and blue are passed to the left eye, and second primary colors of red, green, and blue are passed to the right eye. The first group of primaries and the second group of primaries are distinct so that there is little or no overlap between the first and second groups. To achieve sufficient separation between the two blue primaries, the two wavelengths may be approximately 10 to 20 nm apart. The first blue primary wavelength may be in the range of 450 nm to 460 nm and the second blue primary wavelength may be in the range of 430 nm to 445 nm. With an OPO light source, an effective first blue primary wavelength may be 445 nm and an effective second blue primary wavelength may be 440 nm. Unfiltered illumination sources have a particular advantage in the case of spectrally selective stereoscopic projection systems because the filters used to cut out the short wave blue light typically decrease the amount of light available for the second (shorter wave) blue primary.

Blue light in the safe region may be generated by methods other than an OPO. Other types of blue lasers may be used instead or other types of blue light sources that generate blue light in the safe region such as semiconductor light sources. One type of semiconductor light source is a blue LED. Individual LEDs may be arrayed in bars or other configurations to produce powerful sources of blue light. Also, diode-pumped solid-state lasers may be used to generate blue light with non-linear optical elements. The green wavelengths may be likewise be produced by lasers or LEDs centered at various wavelengths such as 520 nm, 532 nm, or 540 nm, and the red wavelengths may be produced by lasers or LEDs centered at various wavelengths such as 620 nm, 630 nm, or 640 nm.

In another aspect of the optical system shown in FIG. 1, dual illumination is used to illuminate two parts of each SLM in a projector. First laser light source 102 may be used to illuminate the first part of the SLMs and second laser light source 116 may be used to illuminate the second part of the SLMs. Dual illumination may allow reduced complexity in the optical system compared to using separate sets of SLMs. Specific embodiments are described in the following paragraphs but are not meant to be limiting in any way.

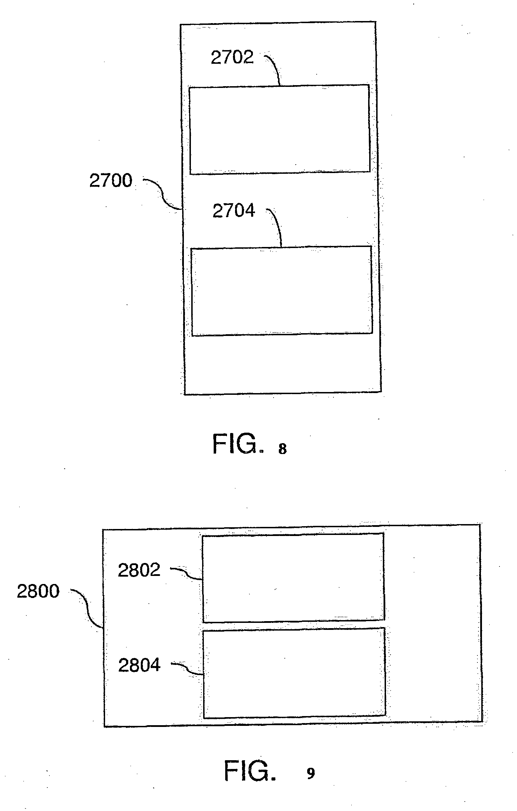

FIG. 8 shows a portrait-oriented SLM with two images located one above the other. First image 2702 is formed in one part of SLM 2700 and second image 2704 is formed in another, distinct part of SLM 2700. First image 2702 and second image 2704 are located such that most of the un-used pixels are above and below each image. In the case of stereoscopic systems, first image 2702 may be the left eye image and second image 2704 may be the right eye image.

FIG. 9 shows a landscape-oriented SLM with two images located one above the other. First image 2802 is formed in one part of SLM 2800 and second image 2804 is formed in another, distinct part of SLM 2800. First image 2802 and second image 2804 are located such that most of the un-used pixels are on the left and right of each image. In the case of stereoscopic systems, first image 2802 may be the left eye image and second image 2804 may be the right eye image.

## Claims

1. A stereoscopic projection system comprising a first infrared laser, a first gain module that amplifies a light beam from the first infrared laser, a first second-harmonic generator (SHG) that frequency doubles a light beam from the first gain module, a first optical parametric amplifier (OPO) that parametrically amplifies a light beam from the first SHG, and a second SHG that frequency doubles a first light beam from the first OPO wherein part of the light beam from the first SHG passes through the first OPO to form a remaining light beam, the remaining light beam has a first wavelength of green light and a light beam from the second SHG has a first wavelength of red light, **characterized in that** the system further comprises a second infrared laser, a second gain module that amplifies a light beam from the second infrared laser, a third SHG that frequency doubles a light beam from the second gain module, wherein a light beam from the third SHG has a second wavelength of green light, a fourth SHG that frequency doubles a first light beam from the first OPO, wherein a light beam from the fourth SHG has a first wavelength of blue light, and the light beam from the second SHG, and the light beam from the fourth SHG combine to form an image that is directed to one eye of a viewer and not directed to the other eye of the viewer, a switch that switches the light beam from the first SHG, a second OPO that parametrically amplifies the light beam from the first SHG, a fifth SHG that frequency doubles a first light beam from the second OPO, and a sixth SHG that frequency doubles a second light beam from the second OPO, wherein the switch sends the light beam from the first SHG alternately to the first OPO and the second OPO, and a light beam from the fifth SHG has a second wavelength of red light, and a light beam from the sixth SHG has second wavelength of blue light.

2. The system of claim 1 further comprising:
a third infrared laser;
a third gain module that amplifies a light beam from the third infrared laser;
a fifth SHG that frequency doubles a light beam from the third gain module;
a second OPO that parametrically amplifies a light beam from the fifth SHG;
a sixth SHG that frequency doubles a first light beam from the second OPO; and
a seventh SHG that frequency doubles a second light beam from the second OPO;
wherein a light beam from the sixth SHG has a second wavelength of red light, and a light beam from the seventh SHG has a second wavelength of blue light.

## Patentansprüche

1. Stereoskopisches Projektionssystem, das Folgendes umfasst: einen ersten Infrarotlaser, ein erstes Verstärkungsmodul, das einen Lichtstrahl von dem ersten Infrarotlaser verstärkt, einen ersten Zweite-Harmonische-Generator (SHG), der einen Lichtstrahl vom ersten Verstärkungsmodul frequenzverdoppelt, einen ersten optischen parametrischen Verstärker (OPO), der einen Lichtstrahl vom ersten SHG parametrisch verstärkt, und einen zweiten SHG, der einen ersten Lichtstrahl vom ersten OPO frequenzverdoppelt, wobei ein Teil des Lichtstrahls vom ersten SHG durch den ersten OPO passiert, um einen verbleibenden Lichtstrahl zu bilden, wobei der restliche Lichtstrahl eine erste Wellenlänge von grünem Licht hat und ein Lichtstrahl vom zweiten SHG eine erste Wellenlänge von rotem Licht hat, **dadurch gekennzeichnet, dass** das System ferner Folgendes umfasst: einen zweiten Infrarotlaser, ein zweites Verstärkungsmodul, das einen Lichtstrahl vom zweiten Infrarotlaser verstärkt, einen dritten SHG, der einen Lichtstrahl vom zweiten Verstärkungsmodul frequenzverdoppelt, wobei ein Lichtstrahl vom dritten SHG eine zweite Wellenlänge von grünem Licht hat, einen vierten SHG, der einen ersten Lichtstrahl vom ersten OPO frequenzverdoppelt, wobei ein Lichtstrahl vom vierten SHG eine erste Wellenlänge von blauem Licht hat und der Lichtstrahl vom zweiten SHG und der Lichtstrahl vom vierten SHG sich zu einem Bild kombinieren, das auf ein Auge eines Betrachters gerichtet und auf das andere Auge des Betrachters nicht gerichtet ist, einen Schalter, der den Lichtstrahl vom ersten SHG schaltet, einen zweiten OPO, der den Lichtstrahl vom ersten SHG parametrisch verstärkt, einen fünften SHG, der einen ersten Lichtstrahl vom zweiten OPO frequenzverdoppelt, und einen sechsten SHG, der einen zweiten Lichtstrahl vom zweiten OPO frequenzverdoppelt, wobei der Schalter den Lichtstrahl vom ersten SHG abwechselnd zum ersten OPO und zum zweiten OPO schaltet, und ein Lichtstrahl vom fünften SHG eine zweite Wellenlänge von rotem Licht hat und ein Lichtstrahl vom sechsten SHG eine zweite Wellenlänge von blauem Licht hat.

2. System nach Anspruch 1, das ferner Folgendes umfasst:
einen dritten Infrarotlaser;
ein drittes Verstärkungsmodul, das einen Lichtstrahl vom dritten Infrarotlaser verstärkt;
einen fünften SHG, der einen Lichtstrahl vom dritten Verstärkungsmodul frequenzverdoppelt;
einen zweiten OPO, der einen Lichtstrahl vom fünften SHG parametrisch verstärkt;
einen sechsten SHG, der einen ersten Lichtstrahl vom zweiten OPO frequenzverdoppelt; und
einen siebten SHG, der einen zweiten Lichtstrahl vom zweiten OPO frequenzverdoppelt;
wobei ein Lichtstrahl vom sechsten SHG eine zweite Wellenlänge von rotem Licht hat und ein Lichtstrahl vom siebten SHG eine zweite Wellenlänge von blauem Licht hat.

## Revendications

1. Système de projection stéréoscopique comprenant un premier laser infrarouge, un premier module de gain qui amplifie un faisceau de lumière provenant du premier laser infrarouge, un premier générateur de deuxième harmonique (SHG) qui double en fréquence un faisceau de lumière provenant du premier module de gain, un premier amplificateur paramétrique optique (OPO) qui amplifie paramétriquement un faisceau de lumière provenant du premier SHG, et un deuxième SHG qui double en fréquence un premier faisceau de lumière provenant du premier OPO dans lequel une partie du faisceau de lumière provenant du premier SHG passe par le premier OPO pour former un faisceau de lumière restant, le faisceau de lumière restant ayant une première longueur d'onde de lumière verte et un faisceau de lumière provenant du deuxième SHG ayant une première longueur d'onde de lumière rouge, **caractérisé en ce que** le système comprend en outre un deuxième laser infrarouge, un deuxième module de gain qui amplifie un faisceau de lumière provenant du deuxième laser infrarouge, un troisième SHG qui double en fréquence un faisceau de lumière provenant du deuxième module de gain, dans lequel un faisceau de lumière provenant du troisième SHG a une seconde longueur d'onde de lumière verte, un quatrième SHG qui double en fréquence un premier faisceau de lumière provenant du premier OPO, dans lequel un faisceau de lumière provenant du quatrième SHG a une première longueur d'onde de lumière bleue, et le faisceau de lumière provenant du deuxième SHG, et le faisceau de lumière provenant du quatrième SHG se combinent pour former une image qui est dirigée vers un oeil d'un téléspectateur et non dirigée vers l'autre oeil du téléspectateur, un commutateur qui commute le faisceau de lumière provenant du premier SHG, un second OPO qui amplifie paramétriquement le faisceau de lumière provenant du premier SHG, un cinquième SHG qui double en fréquence un premier faisceau de lumière provenant du second OPO, et un sixième SHG qui double en fréquence un second faisceau de lumière provenant du second OPO, le commutateur envoyant le faisceau de lumière provenant du premier SHG alternativement au premier OPO et au second OPO, et un faisceau de lumière provenant du cinquième SHG a une seconde longueur d'onde de lumière rouge, et un faisceau de lumière provenant du sixième SHG a une seconde longueur d'onde de lumière bleue.

2. Système selon la revendication 1, comprenant en outre :
un troisième laser infrarouge ;
un troisième module de gain qui amplifie un faisceau de lumière provenant du troisième laser infrarouge ;
un cinquième SHG qui double en fréquence un faisceau de lumière provenant du troisième module de gain ;
un second OPO qui amplifie paramétriquement un faisceau de lumière provenant du cinquième SHG ;
un sixième SHG qui double en fréquence un premier faisceau de lumière provenant du second OPO ; et
un septième SHG qui double en fréquence un second faisceau de lumière provenant du second OPO ;
dans lequel un faisceau de lumière provenant du sixième SHG a une seconde longueur d'onde de lumière rouge, et un faisceau de lumière provenant du septième SHG a une seconde longueur d'onde de lumière bleue.
